# EUROPEAN PATENT APPLICATION

(11) **EP 1 892 845 A1**
(43) Date of publication of application: **27.02.2008**
(21) Application number: 06460028.1
(22) Date of filing: 21.08.2006
(51) Int. Cl.: H04B 7/005

(54) **Method and system for an efficient random access procedure in a mobile communications system**

(71) Applicant: Nokia Siemens Networks GmbH & Co. KG, 81541 München (DE)
(72) Inventor: Iwajlo, Angelow, 43-430 Skoczow (PL)

(57) **Abstract**

The present invention provides a method for an efficient random access procedure in a mobile communications system, said mobile communications system comprising of at least one base station and at least one terminal, wherein said at least one terminal applies power ramping after an unsuccessful initial transmission, said power ramping comprising of at least one power ramping step with an associated transmission power. The method is characterized in that said transmission power for each power ramping step is randomly selected.

Furthermore, the invention provides a terminal and a base station with means for executing the described method and a corresponding mobile communications system.

## Description

The present invention relates to an efficient random access procedure in a mobile communications system, particularly to power ramping during random access.

In the context of 3GPP LTE (3rd Generation Partnership Project Long Term Evolution) study item on "Evolved UTRA and UTRAN", a random access procedure has to be defined for the LTE system. One of the open issues for said random access procedure is to specify an initial transmit power establishment algorithm which will provide low system access time to ensure fast transmission detection by the base station, low interference level in uplink, and low power consumption of the terminal to ensure higher battery life.

With regard to random access in a mobile communications system, there is a trade-off between system access time and interference level in uplink caused by the initial transmit power establishment procedure for random access, as interferences increase with increasing transmit power, while a high transmit power ensures a low system access time.

In Wideband Code Division Multiple Access (WCDMA), currently used in the Universal Mobile Telecommunications System (UMTS), an open loop power control method is applied before a transmission on the random access channel (RACH). Said open loop power control method is working in the following way: In a first step, a terminal measures received downlink pilot signal strength (RSCP) and receives information about transmit power of the downlink pilot channel and the level of uplink interference. Said information is sent via the broadcast channel (BCH). In a second step, the path loss in downlink including shadowing effects is calculated on the basis of the received information and measurements. In a third step, the initial transmit power level of the open loop power control is defined on the basis of the downlink path loss including shadowing calculations, level of uplink interference, and a defined margin due to the open loop inaccuracy. In the case that no positive feedback is received from the base station, power ramping is applied by increasing the transmit power by a certain fixed value (e.g. 1dB) in each power ramping step. Said power ramping is repeated as long as no acknowledgment from the base station is received by the terminal.

The accuracy of the open loop power control in normal conditions is specified to be within ±9dB. The inaccuracy results from the low terminal measurement accuracy due to large power dynamics and imperfect correlation between uplink and downlink path loss due to different frequencies used, as well as from shadowing and fast fading. This accuracy can have a negative impact on the system access time. For instance, assuming a 1dB power ramping step and an estimated initial power level of 9dB lower in comparison to the required power, it is necessary to use ten intervals of time in order to reach the required power.

It is an aim of embodiments of the invention to address at the problem discussed above by providing a solution which is an efficient trade-off between the system access time and the interference level in uplink.

Said problem is solved by the features mentioned in the independent claims. Preferred embodiments of the invention are described in the dependant claims.

The present invention provides a method for an efficient random access procedure in a mobile communications system, said mobile communications system comprising of at least one base station and at least one terminal, wherein said at least one terminal applies power ramping after an unsuccessful initial transmission, said power ramping comprising of at least one power ramping step with an associated transmission power. The method is characterized in that said transmission power for each power ramping step is randomly selected.

Furthermore, the invention provides a terminal with means for executing the described method and a corresponding mobile communications system.

The invention provides the advantage, amongst others, that an efficient trade-off between the system access time and the interference level in uplink is achieved concerning the random access procedure in a mobile communications system.

Preferred embodiments of the present invention will now be described with reference to the accompanying drawings in which:
Figure 1: shows a prior art power ramping procedure with a fixed value
Figure 2: shows a power ramping procedure with a randomized value
Figure 3: shows an alternative power ramping procedure with a randomized value

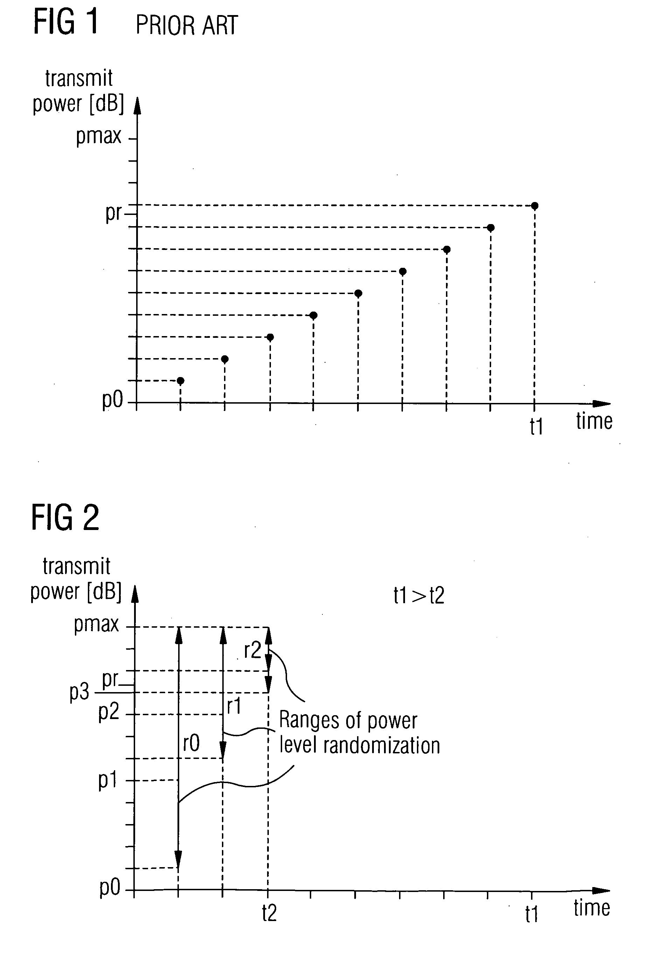

Figure 1 shows a diagram visualizing a power ramping procedure with a fixed value for increasing the transmit power used in each power ramping step as mentioned above as known from prior art. The x-axis depicts time, while the y-axis depicts transmit power with a maximum transmit power pmax. In this example, a fixed 1dB increase for each power ramping step is assumed. In the example, an estimated initial power level p0 is 9dB lower in comparison to the required power pr. Therefore, it is necessary to use ten intervals of time in order to reach the required power pr which is achieved at a first point of time t1.

Figure 2 shows a diagram visualizing the proposed power ramping procedure. Instead of a fixed value for increasing the transmission power for each power ramping step, a randomized transmission power value is used. For a terminal willing to contact a base station, said proposed power ramping procedure comprises the following steps:
In a first step (not shown in figure 2), said terminal measures the downlink quality. This can e.g. be done by measuring the strength of a downlink pilot signal sent by said base station. Said terminal furthermore receives information sent by said base station about the transmit power used by said base station for the downlink pilot. Additionally, said base station sends information concerning uplink interference. Said information can e.g. be transmitted on the broadcast control channel.
In a second step (not shown in figure 2), said terminal calculates the path loss for the downlink including shadowing effects, based on said received downlink pilot signal strength and said information sent by the base station.
In a third step, an initial power level p0 is calculated on the basis of said path loss in downlink including shadowing effects, said level of uplink interference and a defined constant value. Said terminal sends random access signals using said initial power level p0.

In case that no positive feedback is received from said base station when using said initial power level p0, in a fourth step power ramping is applied. The increase of transmit power for a next transmission is randomly selected from an adaptable range r0, r1, r2. The adaptable range r0, r1, r2 is defined by a lower margin and an upper margin, the lower margin converging continuously towards the upper margin with each power ramping step. With the lower margin converging continuously towards the upper margin, the adaptable range r0, r1, r2 for randomly selecting a next transmission power is becoming narrower with each power ramping step.

In one embodiment, the lower margin is defined by the last transmit power plus a fixed value, and the upper margin is defined by a maximum transmit power.

Said fourth step, i.e. said power ramping, is repeated as long as no acknowledgment from said base station is received by said terminal.

Figure 2 shows an example for the presented method. If the estimated power p0 is in the order of 5dBm, the required power pr (for acknowledgment from the base station) is in the order of 13.6dBm, the maximum power pmax is in the order of 21dBm and the fixed value is in the order of 1dB, the proposed procedure would look as follows:
First transmit power p0 in the order of 5dBm
Second transmit power p1 randomized from a first range r0 [6dBm, 21dBm], said first range r0 defined as described above, i.e. the lower margin defined by last transmit power (5dBm) plus a fixed value (1dB), and the upper margin defined by said maximum transmit power (21dBm). Randomly selected is a value in the order of 10dBm.
Third transmit power p2 randomized from a second range r1 [10dBm + 1dB = 11dBm, 21dBm]. Randomly selected: a value in the order of 13dBm
Fourth transmit power p3 randomized from a third range r2 [13dBm + 1dB = 14dBm, 21dBm]. Randomly selected: a value in the order of 15dBm. Acknowledgment from the base station as said power required pr of 13.6dBm is exceeded.

Figure 2 shows that the described method is more time efficient than the power ramping method shown in figure 1. With the described method, the required power pr is exceeded at a second point of time t2 with said second point of time t2 being earlier than said first point of time t1, i.e. the described method allows faster system access than the method shown in figure 1.

In the proposed power ramping procedure, the initial transmission power for random access is set on the basis of said received downlink pilot signal. The terminal can receive information about the downlink pilot signal transmit power used by said base station e.g. on the broadcast channel. Using this information, the terminal can easily calculate the downlink path loss including shadowing effects. The terminal can estimate the channel thanks to predefined symbols in the pilot channel. The range of the power level randomization changes dynamically, providing system access time acceleration.

In another embodiment, an alternative power ramping procedure is based on said inaccuracy concerning said open loop power control. Said inaccuracy is represented by a fixed inaccuracy value, acquired by simulations and specified for the communications system. For UMTS, said inaccuracy is 9dB under normal conditions and 12dB under extreme conditions.

In the case of a fixed inaccuracy value for said open loop power control, in a first step of the proposed procedure a mean transmission power is estimated by said terminal on the basis of path loss calculations in downlink, uplink interference information transmitted on the broadcast channel and a defined constant value.

In a second step, an initial power level is randomly selected from an adaptable range, said adaptable range having a lower margin and an upper margin. The lower margin in this embodiment is defined by said mean transmission power minus said inaccuracy of the open loop power control. The upper margin in this embodiment is defined by said mean transmission power plus said inaccuracy of the open loop power control. Said terminal sends random access signals using said initial power level.

In a third step, in case no positive feedback is received from the base station, said mean transmission power is increased, thereby shifting said adaptable range up by a certain value. Said certain value can be a fixed step size or a linearly or geometrically increased step size. As said inaccuracy is fixed, the adaptable range is not changed in size as it is shifted up. Said third step, i.e. said power ramping, is repeated as long as no acknowledgment from said base station is received by said terminal.

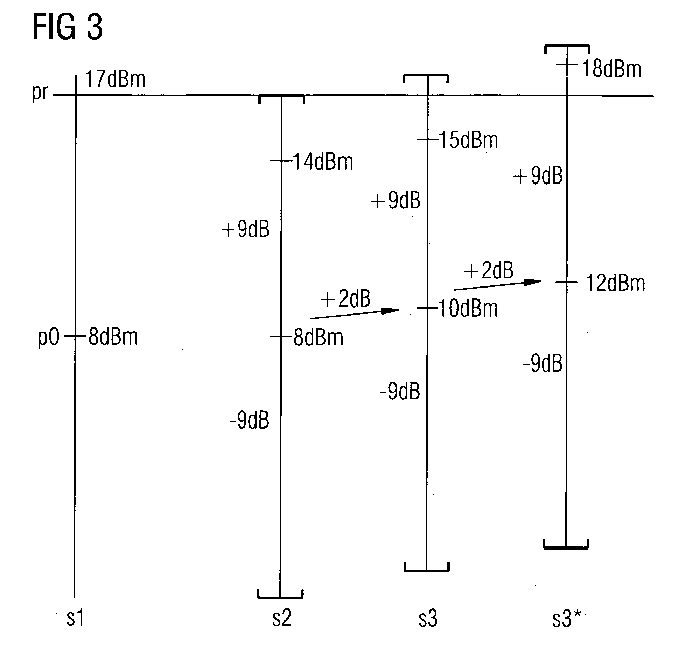

In the following, an example for the described alternative power ramping procedure is described using figure 3:
The transmission power required pr is 17dBm, the inaccuracy of the open loop power control is 9dB, and said certain value, i.e. the fixed power ramping step of 2dB is applied.

For this example, in said first step s1 the estimated mean transmission power is 8dBm. The first transmit power p0 for the initial transmission therefore is 8dBm.

In said second step s2 the randomised transmission power value is selected from the range [8dBm - 9dB, 8dBm + 9dB]. In this example, the terminal selects 14dBm.

In said third step s3, the mean transmission power is increased by the fixed power ramping step size of 2dB; therefore the randomised transmission power value is selected from the range [10dBm - 9dB, 10dBm + 9dB]. In this example, the terminal selects 15dBm, which is still below the power required pr.

Therefore, said third step is repeated with the mean transmission power being increased again. The randomised transmission power value is selected in the repeated step s3* from the range [12dBm - 9 dB, 12dBm + 9dB]. In this example, the terminal selects 18dBm, which is more than the power required.

In this embodiment, the upper margin of the range for selecting the randomised transmission power is theoretically not limited by a maximal transmission power. Practically, the terminal transmission power cannot exceed the maximal power.

In contrast to the presented method shown in figure 2, in this embodiment the transmission power selected in a power ramping step can be lower than the transmission power selected in the previous power ramping step, although the probability for this is low as the alternative method ensures that the new mean transmission power for said power ramping step is higher than the mean transmission power for said previous power ramping step. The rationale for that is that a terminal at the beginning (when estimating said mean transmission power p0) might be in bad radio conditions (caused by e.g. slow fading or fast fading), thereby said estimated mean transmission power was estimated as a high transmission power value. During a subsequent power ramping step, it can happen that said terminal is in good radio conditions and does not need to transmit with a high transmission power, as then a lower transmission power value, compared to the previous power ramping step, would be enough and would furthermore decrease interference. Therefore, the alternative method as shown in figure 2 allows to select a transmission power lower than a previous transmission power with a certain probability.

Compared to the power ramping procedure known from prior art as shown in Figure 1, the proposed solutions minimize intra-cell (other terminals can use the same resources in order to get access to the system) and inter-cell interference (in case of frequency reuse of 1). Furthermore, the dynamic power level randomization range speeds up system access time in an efficient way. The proposed solutions also minimize the number of collisions and maximize the terminal's battery life because of lower number of transmissions necessary in order to get access to the system.

Furthermore, in case of more than one terminal requesting random access, the randomisation process avoids the effect of several terminals using the same transmission power at the same time repeatedly, as it may happen in case of a fixed power ramping step. As the transmission power in each power ramping step is randomised according to the described method, it is less likely for two terminals to use the same transmission power at the same time. The described method avoids such collisions by randomising transmission power used in random access and ensures that at least one terminal gets access to the system as said terminal uses a higher transmission power than other terminals, as it is less likely that more than one terminal applying the described method uses the same transmission power in a power ramping step at a time.

The described methods can be used with any contention protocol like slotted-ALOHA protocol, p-persistent protocol, etc. Furthermore, the invention can be used independently of the application of the power setting, e.g. per each access burst, or per group of access bursts.

The proposed procedures can also be applied in other systems, e.g. WCDMA in order to accelerate the system access time.

## Claims

1. A method for an efficient random access procedure in a mobile communications system, said mobile communications system comprising of at least one base station and at least one terminal, wherein said at least one terminal applies power ramping after an unsuccessful initial transmission, said power ramping comprising of at least one power ramping step with an associated transmission power,
**characterized in that**
said transmission power for each power ramping step is randomly selected.

2. The method in claim 1, wherein said transmission power for each power ramping step is randomly selected from a adaptable range (r0, r1, r2), said adaptable range (r0, r1, r2) being defined by a lower margin and an upper margin.

3. The method as claimed in any of the preceding claims, wherein said adaptable range (r0, r1, r2) is dynamically changed after each power ramping step by changing said lower margin and said upper margin or said lower margin.

4. The method as claimed in any of the preceding claims, wherein for a first power ramping step with a first transmission power and a subsequent second power ramping step with a second transmission power said second transmission has a value equal to or higher than said first transmission power.

5. The method as claimed in any of the preceding claims, wherein for each power ramping step, said lower margin is defined by a value of a last used transmission power increased by a certain additional value and said upper margin defined by a maximum transmission power.

6. The method in claim 1 or 2, wherein said lower margin and said upper margin are defined by estimating a mean transmission power based on downlink measurements, with said lower margin defined by said mean transmission power minus a system inaccuracy value with respect to said downlink measurements and with said upper margin defined by said mean transmission power plus said system inaccuracy.

7. The method in claim 6, wherein said adaptable range (r0, r1, r2) is shifted up in each power ramping step by adding a certain additional value to said mean transmission power.

8. Terminal with means for applying power ramping after an unsuccessful initial transmission during random access, said power ramping comprising of at least one power ramping step with an associated transmission power, said transmission power being adapted in each power ramping step, and with means for randomly selecting said transmission power for each power ramping step.

9. Base station with means for receiving random access signals according to any of claims 1 to 7.

10. Mobile communications system with at least one terminal as claimed in claim 8, and with at least one base station as claimed in claim 9.
